# FASCICULE DE BREVET EUROPEEN

(11) **EP 1 007 328 B1**
(45) Date de publication et mention de la délivrance du brevet: **11.09.2002**
(21) Numéro de dépôt: 98921319.4
(22) Date de dépôt: 02.06.1998
(51) Int. Cl.: B29C 49/28, B29C 49/78

(54) **PROCEDE ET DISPOSITIF DE MOULAGE PAR SOUFFLAGE**
VERFAHREN UND VORRICHTUNG ZUM BLASFORMEN
BLOW MOULDING METHOD AND DEVICE

(30) Priorité: 05.06.1997 FR 9707137
(43) Date de publication de la demande: 14.06.2000
(73) Titulaire: MAG-PLASTIC MACHINERY S.A., 1896 Vouvry (CH)
(72) Inventeur: GALLAY, Jean, CH-1245 Collonge-Bellerive (CH)
(74) Mandataire: Nithardt, Roland
(86) Numéro de dépôt international: CH9800230
(87) Numéro de publication internationale: WO98055287

(56) Documents cités:
- DE-A- 2 064 930
- DE-A- 3 823 671
- GB-A- 2 302 302
- US-A- 4 964 031

## Description

La présente invention concerne un procédé de moulage par soufflage d'objets creux, et notamment de récipients à partir de préformes, dans un dispositif comportant au moins deux modules de soufflage, chacun de ces modules comportant au moins une presse de soufflage desdits objets creux, ce procédé comportant, pour chaque module de soufflage, au moins une étape de chargement des préformes sur des éléments de support équidistants d'un ruban convoyeur, ce ruban étant entraîné en continu, une étape de chauffage desdites préformes dans une station de chauffage disposée le long d'un circuit défini partiellement par ledit ruban convoyeur, une étape d'ouverture de la presse de soufflage, une étape d'introduction des préformes dans la presse, une étape de fermeture de la presse, une étape de soufflage des objets creux, une étape d'ouverture de la presse, une étape de retrait des objets creux de la presse et une étape d'évacuation des objets creux.

Elle concerne également un dispositif de moulage par soufflage d'objets creux, et notamment de récipients à partir de préformes, comportant au moins une station de chauffage des préformes, disposée le long d'un circuit partiellement défini par un ruban convoyeur, ce ruban étant entraîné en continu, au moins une presse de moulage desdits objets creux comprenant au moins un moule de soufflage, des moyens d'introduction des préformes dans ledit moule et des moyens d'évacuation des objets creux hors du moule, ce dispositif comportant au moins deux modules de soufflage, chaque module comportant une unité de chargement des préformes sur des éléments de support équidistants du ruban convoyeur, un four de chauffage des préformes disposé le long d'un circuit défini partiellement par ledit ruban convoyeur, des moyens pour transférer les préformes à la sortie du four de chauffage du ruban convoyeur vers une presse de moulage, et un organe de déchargement des objets creux, pour la mise en oeuvre du procédé ci-dessus.

Les procedé et dispositif de moulage décrits précédemment sont connus du document DE 38 23 671.

Les dispositifs de moulage actuels comportent habituellement des lignes de production à plusieurs postes de travail disposés les uns à la suite des autres. Ces dispositifs manquent de souplesse d'utilisation et ne permettent pas d'adapter facilement la quantité d'objets produits aux besoins de l'utilisateur. La flexibilité de telles machines est très faible.

Des dispositifs de moulage permettant une plus grande souplesse d'utilisation comportent plusieurs modules de soufflage.

Dans ce type de dispositifs, chaque module effectue toutes les opérations simultanément et notamment, le déplacement des préformes, leur introduction dans des presses, le soufflage et l'éjection hors des presses des récipients formés.

Toutes ces opérations nécessitent des installations électriques et/ou pneumatiques de grande taille et de grande puissance du fait qu'elles doivent fonctionner pour plusieurs modules simultanément. Ces installations sont donc également relativement coûteuses. D'autre part, comme le coût d'exploitation dépend des pointes d'énergie consommée et pas seulement de l'énergie totale effectivement utilisée, une meilleure répartition de cette consommation d'énergie permettrait de réduire le coût d'exploitation. Dans les lignes dans lesquelles le ruban convoyeur qui transporte les préformes avance pas à pas, la solution consiste à retarder électriquement la commande d'un certain nombre d'opérations identiques d'un module au suivant. Ce retard de la commande peut être obtenu par un pilotage électronique de l'installation ou par une programmation adéquate de cette commande.

Dans les lignes dans lesquelles le ruban convoyeur est entraîné en continu, cette solution ne peut pas être appliquée. Le décalage dans le temps de certaines opérations d'un module au module suivant doit être obtenu par d'autres moyens.

La présente invention se propose d'offrir un de ces moyens, qui est particulièrement simple et efficace pour réaliser ledit décalage dans le temps de certaines opérations d'un dispositif de moulage par soufflage comportant plusieurs modules associés à un ruban convoyeur des préformes entraîné en continu.

Ce but est atteint par le procédé tel que défini en préambule et caractérisé en ce qu'au moins les étapes de chargement desdites préformes sur les éléments de support, et/ou les étapes d'ouverture des presses pour chacun des modules sont décalées dans le temps.

Selon un mode de réalisation avantageux du procédé, le décalage dans le temps est différent pour chaque module.

D'une manière préférentielle, pour assurer le décalage dans le temps des étapes d'ouverture des presses pour chacun des modules, on fait vaner la distance du parcours des préformes entre les points de chargement des préformes et les points d'entrée desdites préformes dans les presses correspondantes, pour chacun de ces modules.

A cet effet, on augmente avantageusement, d'un des modules à l'autre, la distance entre les points de chargement des préformes et les points d'entrée desdites préformes dans les presses correspondantes.

Selon une variante particulièrement intéressante, l'on peut faire varier la distance entre les points de chargement des différents modules en écartant ces modules les uns des autres de façon différente, ces modules étant identiques.

Dans ce cas, les écartements entre les modules identiques correspondent de préférence à une progression arithmétique.

Le but fixé par l'invention est également atteint par le dispositif tel que décrit en préambule et caractérisé en ce qu'il comprend des moyens pour décaler dans le temps, pour chacun de ces modules de soufflage, au moins les étapes de chargement desdites préformes sur les éléments de support et/ou les étapes d'ouverture des presses de moulage.

Selon une forme de réalisation préférée, le ruban convoyeur sans fin commun du dispositif forme un circuit fermé unique agencé pour alimenter chaque module, ce ruban convoyeur étant entraîné en continu.

Selon une première forme de réalisation, le dispositif comporte n modules identiques et les écartements entre les différents modules varient.

Dans ce cas, les écartements entre les n modules varient avantageusement selon une progression arithmétique.

Selon une forme de réalisation avantageuse dans laquelle chaque module comporte une roue de transfert, disposée entre le four de chauffage et le point d'entrée des préformes dans la presse, et des moyens de transfert des préformes sur cette roue de transfert, la distance du parcours des préformes entre le point de chargement et les moyens de transfert des préformes sur la roue de transfert est différente d'un des modules à l'autre.

Dans une variante de cette forme de réalisation dans laquelle chaque module comporte une roue de transfert, disposée entre le four de chauffage et le point d'entrée des préformes dans la presse, et des moyens de transfert des préformes sur cette roue de transfert, la distance du parcours des préformes entre les moyens de transfert des préformes et le point d'entrée des préformes dans la presse peut être différente d'un des modules à l'autre.

Selon une autre variante de cette réalisation dans laquelle chaque module comporte une roue de transfert, disposée entre le four de chauffage et le point d'entrée des préformes dans la presse, et des moyens de transfert des préformes sur cette roue de transfert, la distance du parcours des préformes entre le point de chargement et les moyens de transfert des préformes sur la roue de transfert d'une part, et la distance du parcours des préformes entre les moyens de transfert des préformes et le point d'entrée des préformes dans la presse d'autre part, sont différentes d'un des modules à l'autre.

On peut également envisager que la distance du parcours des préformes entre les points de chargement de ces préformes de chaque module et les moyens de transfert positionnés au point d'entrée de ces préformes dans la presse de moulage correspondante, est différente pour chacun des modules.

La présente invention et ses avantages seront mieux compris en référence à un mode de réalisation préféré et aux dessins annexés dans lesquels :
- la figure 1 illustre un dispositif de moulage selon la présente invention, comportant trois modules, et
- la figure 2 illustre schématiquement un dispositif de moulage selon l'invention dans lequel des modules identiques sont décalés le long d'un convoyeur unique.

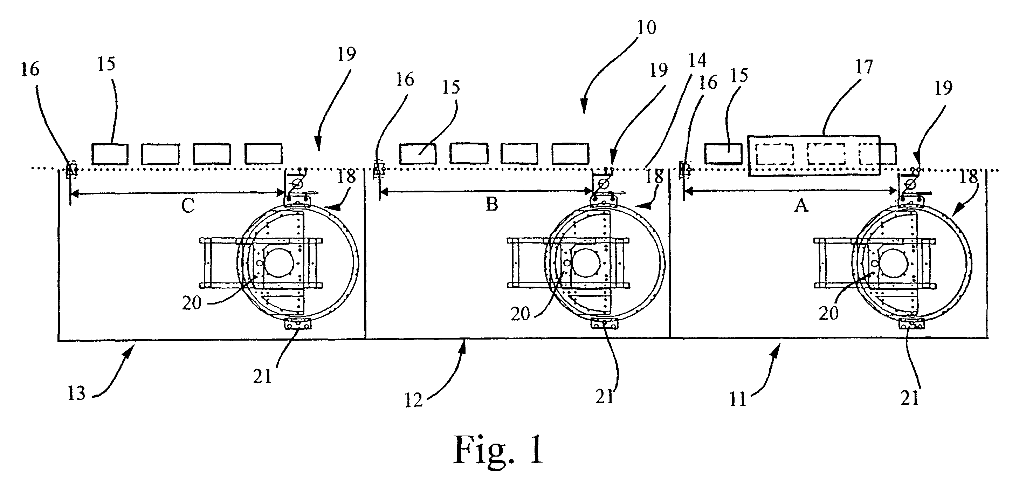

En référence à la figure 1, le dispositif 10 selon la présente invention comporte trois modules de moulage par soufflage 11, 12, et 13 reliés par une bande de transport sans fin commune. Cette bande de transport est réalisée sous la forme d'un ruban convoyeur 14 tournant autour de deux cylindres (non représentés) d'axes sensiblement verticaux. Ce ruban est entraîné de façon continue par un moteur électrique (non représenté). Des éléments de support 15, tels que des doigts verticaux, sont régulièrement espacés le long du ruban convoyeur. Ces doigts sont agencés pour pouvoir maintenir des préformes destinées au moulage par soufflage d'objets creux tels que des bouteilles. Les doigts sont entraînés en rotation de telle manière que les préformes tournent sur elles-mêmes autour de leur axe longitudinal pendant leur transport. A cet effet les doigts portent chacun un pignon denté qui est en prise avec une chaîne fixe. Le déplacement du ruban 14 entraînant les doigts en prise avec la chaîne fixe provoque la rotation des pignons et par conséquent des doigts de support des préformes.

Chaque module comporte un point de chargement 16, un four 17 de chauffage des préformes, une roue de transfert 18 agencée pour déplacer les préformes en différents endroits du module, des moyens de transfert 19 des préformes du ruban convoyeur sur la roue de transfert, une presse 20 pour le moulage des objets et un organe de déchargement 21 des objets creux moulés par soufflage.

Le four 17 est du type conventionnel et permet de chauffer les préformes pendant leur déplacement sur les doigts du ruban convoyeur 14. Ce four est placé immédiatement en amont des moyens de transfert 19. Ces moyens de transfert comportent deux pinces agencées pour saisir deux préformes chauffées placées sur les doigts du ruban convoyeur et pour les placer sur deux doigts solidaires de la roue de transfert, tout en modifiant l'entraxe des préformes de façon qu'il coïncide avec l'entraxe des doigts de la roue de transfert.

Lors du transport des préformes sur le ruban convoyeur, ces préformes sont relativement proches afin de minimiser la place occupée et pour permettre de raccourcir au maximum la longueur du four de chauffage. Sur la roue de transfert, ces préformes doivent être séparées de façon à permettre le moulage simultané par exemple de deux objets tels que des bouteilles, dont les dimensions sont supérieures à celles des préformes.

La presse 20 de chaque module est du type conventionnel et comporte par exemple un moule à deux empreintes. Ce moule est formé de deux demi-moules actionnés par un mécanisme d'ouverture et de fermeture.

L'organe de déchargement 21 des objets creux après le moulage comporte deux pinces agencées pour saisir les bouteilles finies et pour les évacuer.

Dans la réalisation décrite, dans le premier module 11, la distance entre le point de chargement 16 et les moyens de transfert 19 a une valeur A. Dans le module 12 cette même distance a une valeur B qui est supérieure à la distance A. Dans le module suivant 13, cette même distance a une valeur C qui est supérieure à la valeur B définie précédemment. Comme les distances sont différentes d'un module à l'autre et comme la vitesse de cheminement du ruban convoyeur est constante, les temps de passage des préformes des points de chargement aux moyens de transfert sont distincts. En conséquence le transfert des préformes chauffées sur la roue de transfert s'effectue de façon décalée dans le temps d'un module à l'autre.

Selon une autre forme de réalisation, au lieu de décaler les distances entre les points de chargement 16 et les moyens de transfert 19, on pourrait décaler les distances entre les moyens de transfert 19 et les presses 20 de chaque module. Dans la pratique, il suffirait d'augmenter les diamètres des roues de transfert 18, pour autant que leur vitesse de rotation périphérique reste la même dans chaque module.

Une troisième variante pourrait consister à modifier à la fois ces deux distances sur chacun des modules.

Le procédé selon la présente invention opère de la façon suivante. Les préformes sont placées successivement sur chaque doigt du ruban convoyeur 14 au moyen d'un dispositif approprié du point de chargement 16. Les préformes sont déplacées de façon continue au moyen de ce ruban convoyeur de telle façon qu'elles séjournent pendant une durée prédéterminée dans le four de chauffage 17 du module auquel le four est associé. La vitesse étant constante, la durée du séjour des préformes dans le four est égale au rapport de la longueur du four et de la vitesse de déplacement du ruban.

Lorsque deux préformes arrivent, dans une position prédéterminée, à proximité des moyens de transfert 19, ces derniers prélèvent par exemple simultanément deux préformes chauffées et les placent sur les doigts de la roue de transfert en adaptant leur entraxe.

La presse 20 de l'un des modules, appelé premier module 11, est ouverte au moyen du mécanisme d'ouverture et de fermeture approprié. La roue de transfert de ce premier module effectue par exemple une rotation à vitesse constante d'un quart de tour de façon à amener les préformes dans la presse.

Le mécanisme d'ouverture et de fermeture ferme ensuite le moule, et les bouteilles sont moulées par soufflage de façon conventionnelle. Le moule est maintenu fermé.

Dans le cas où le décalage dans le temps est obtenu par une variation des distances entre le point de chargement 16 et les moyens de transfert 19, la roue de transfert du deuxième module 12, immédiatement adjacent au premier module 11, reste immobile pendant un certain temps, appelé temps d'attente, après la mise en rotation de la roue de transfert du premier module. Pendant ce temps d'attente, le moule de ce module est ouvert.

Dès que ce temps d'attente est écoulé, la roue de transfert du deuxième module effectue un quart de tour de façon à placer les préformes dans la presse. Le moule est ensuite fermé, puis les bouteilles sont moulées par soufflage comme dans le cas du premier module.

Pour le module suivant, appelé troisième module 13, la roue de transfert se met en rotation après une durée par exemple équivalente à deux fois le temps d'attente.

Pendant un cycle de soufflage, le ruban convoyeur 14 avance en continu et les moyens de transfert de chaque module prélèvent simultanément deux préformes de façon décalée dans le temps, d'un module au suivant.

Pendant le chargement des préformes sur les roues de transfert, le moule du premier module 11 s'ouvre. Lorsque la roue de transfert de ce module effectue un quart de tour, des préformes sont placées dans le moule et les objets moulés sont déplacés d'un quart de tour dans une zone de déchargement.

Dans cette zone, l'organe de déchargement 21 prélève les objets moulés et les amène dans une zone d'évacuation pour une utilisation ultérieure. Ces opérations se répètent pour chaque module.

L'ouverture et la fermeture du moule de la presse de moulage ainsi que le soufflage des objets sont décalés dans le temps pour chaque module. De cette façon, l'énergie nécessaire pour la fermeture du moule et le soufflage des objets est répartie le long d'un cycle de soufflage

De cette manière, la consommation d'énergie est sensiblement uniforme, il n'y a pas de pointe d'énergie. Ceci permet d'utiliser des installations ayant une dimension plus faible et de réduire les coûts d'exploitation de la machine.

L'utilisation de modules permet d'augmenter la capacité de production de la machine en fonction des besoins de l'utilisateur.

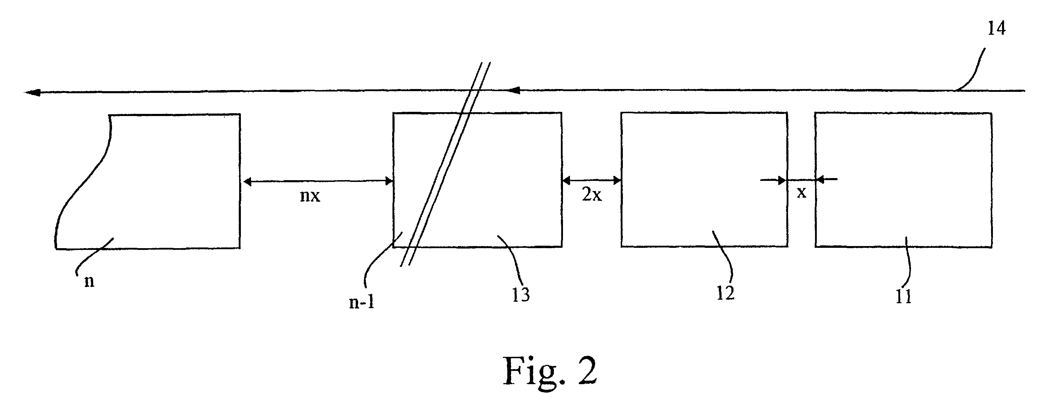

Une variante de réalisation est illustrée par la figure 2. Dans cette construction n modules identiques 11, 12, 13, ..., n sont décalés d'un des modules au suivant d'un espace croissant. L'espace qui sépare le premier module 11 du deuxième est égal à x. L'espace qui sépare le deuxième module 12 du troisième module 13 est égal à 2x. L'espace qui sépare le n-1 ième module du nième est égal à n x. La variation des distances entre les modules successifs obéit dans ce cas à une loi de progression arithmétique.

Toutes les variantes de réalisation de ce dispositif sont possibles. En particulier le nombre d'empreintes par moule ou le nombre n de modules peut être modifié à volonté en fonction des besoins de l'utilisateur.

## Revendications

1. Procédé de moulage par soufflage d'objets creux, et notamment de récipients à partir de préformes, dans un dispositif comportant au moins deux modules de soufflage, chacun de ces modules comportant au moins une presse de soufflage desdits objets creux, ce procédé comportant, pour chaque module de soufflage, au moins une étape de chargement des préformes sur des éléments de support équidistants d'un ruban convoyeur, ce ruban étant entraîné en continu, une étape de chauffage desdites préformes dans une station de chauffage disposée le long d'un circuit défini partiellement par ledit ruban convoyeur, une étape d'ouverture de la presse de soufflage, une étape d'introduction des préformes dans la presse, une étape de fermeture de la presse, une étape de soufflage des objets creux, une étape d'ouverture de la presse, une étape de retrait des objets creux de la presse et une étape d'évacuation des objets creux, **caractérisé en ce qu'**au moins les étapes de chargement desdites préformes sur les éléments de support, et/ou les étapes d'ouverture des presses pour chacun des modules sont décalées dans le temps.

2. Procédé selon la revendication 1, **caractérisé en ce que** le décalage dans le temps est différent pour chaque module.

3. Procédé selon la revendication 1, **caractérisé en ce que**, pour assurer le décalage dans le temps des étapes d'ouverture des presses pour chacun des modules, on fait varier la distance du parcours des préformes entre les points de chargement des préformes et les points d'entrée desdites préformes dans les presses correspondantes pour chacun de ces modules.

4. Procédé selon la revendication 3, **caractérisé en ce que** l'on augmente la distance entre les points de chargement des préformes et les points d'entrée des préformes dans les presses correspondantes d'un des modules à un autre.

5. Procédé selon la revendication 1, **caractérisé en ce que** l'on fait varier la distance entre les points de chargement des différents modules, en écartant ces modules les uns des autres de façon différente, ces modules étant identiques.

6. Procédé selon la revendication 5, **caractérisé en ce que** les écartements entre les modules identiques correspondent à une progression arithmétique.

7. Dispositif de moulage par soufflage d'objets creux, et notamment de récipients à partir de préformes, comportant au moins une station de chauffage des préformes, disposée le long d'un circuit partiellement défini par un ruban convoyeur (14), ce ruban étant entraîné en continu, au moins une presse de moulage desdits objets creux comprenant au moins un moule de soufflage, des moyens d'introduction des préformes dans ledit moule et des moyens d'évacuation des objets creux hors du moule, ce dispositif comportant au moins deux modules de soufflage (11, 12, 13), chaque module comportant une unité de chargement des préformes sur des éléments de support équidistants (15) du ruban convoyeur (14), un four de chauffage (17) des préformes disposé le long d'un circuit défini partiellement par ledit ruban convoyeur, des moyens pour transférer les préformes à la sortie du four de chauffage du ruban convoyeur vers une presse de moulage (20), et un organe de déchargement (21) des objets creux, **caractérisé en ce qu'**il comprend des moyens pour décaler dans le temps, pour chacun de ces modules (11, 12, 13), au moins les étapes de chargement desdites préformes sur les éléments de support, et/ou les étapes d'ouverture des presses de moulage.

8. Dispositif selon la revendication 7, **caractérisé en ce que** le ruban convoyeur sans fin (14) forme un circuit fermé unique agencé pour alimenter chaque module.

9. Dispositif selon la revendication 7, **caractérisé en ce qu'**il comporte n modules identiques, et **en ce que** les écartements entre les différents modules varient.

10. Dispositif selon la revendication 9, **caractérisé en ce que** les écartements entre les n modules varient selon une progression arithmétique.

11. Dispositif selon la revendication 7, dans lequel chaque module comporte une roue de transfert (18). disposée entre le four de chauffage (17) et le point d'entrée des préformes dans la presse, et des moyens de transfert (19) des préformes sur cette roue de transfert, **caractérisé en ce que** la distance du parcours des préformes entre le point de chargement (16) et les moyens de transfert (19) sur la roue de transfert est différente d'un des modules à l'autre.

12. Dispositif selon la revendication 7, dans lequel chaque module comporte une roue de transfert (18). disposée entre le four de chauffage (17) et le point d'entrée des préformes dans la presse, et des moyens de transfert (19) des préformes sur cette roue de transfert, **caractérisé en ce que** la distance du parcours des préformes entre les moyens de transfert (19) des préformes sur la roue de transfert (18) et le point d'entrée des préformes dans la presse (20) est différente d'un des modules à l'autre.

13. Dispositif selon la revendication 7, dans lequel chaque module comporte une roue de transfert (18). disposée entre le four de chauffage (17) et le point d'entrée des préformes dans la presse, et des moyens de transfert (19) des préformes sur cette roue de transfert, **caractérisé en ce que** la distance du parcours des préformes entre le point de chargement (16) des préformes et les moyens de transfert (19) de ces préformes sur la roue de transfert (18) d'une part, et la distance entre les moyens de transfert (19) et le point d'entrée des préformes dans la presse (20) d'autre part, sont différentes d'un des modules à l'autre.

14. Dispositif selon la revendication 7, **caractérisé en ce que** la distance du parcours des préformes entre le point de chargement (16) de ces préformes dans chaque module et les moyens de transfert (19) positionnés au point d'entrée de ces préformes dans la presse de moulage (20) correspondante, est différente d'un des modules à l'autre.

## Claims

1. Blow moulding process for hollow objects and in particular receptacles made from preforms, in a device comprising at least two blowing modules, each of these modules comprising at least one blowing press of said hollow objects, this process comprising, for each blowing module, at least one stage of loading the preforms onto equidistant support elements of a conveyor belt, this belt being continuously driven, one stage of heating said preforms in a heating station located along a circuit partially defined by said conveyor belt, a stage of opening the blowing press, a stage of introducing the preforms into the press, a stage of closing the press, a stage of blowing the hollow objects, a stage of opening the press, a stage of withdrawing the hollow objects from the press and a stage of evacuating the hollow objects, **characterized in that** at least the stages of loading said preforms onto said support elements, and/or the stages of opening the presses on each of the modules are staggered over time.

2. Process according to claim 1, **characterized in that** the time lag is different for each module.

3. Process according to claim 1, **characterized in that** to ensure the time lag of the stages of opening the presses on each of the modules, the distance travelled by the preforms between the preform loading points and the points of entry for said preforms into the corresponding presses is varied for each of these modules.

4. Process according to claim 3, **characterized in that** the distance between the preform loading points and the points of entry for the preforms into the corresponding presses is increased from one module to the other.

5. Process according to claim 1, **characterized in that** the distance between the loading points on the different modules is varied by separating these modules from one another in a different way, these modules being identical.

6. Process according to claim 5, **characterized in that** the spaces between identical modules correspond to an arithmetic progression.

7. Blow moulding device for hollow objects, and in particular receptacles made from preforms, comprising at least one unit for heating preforms, located along a circuit partially defined by a conveyor belt (14), this belt being continuously driven, at least one press for moulding said hollow objects comprising at least one blowing mould, means for introducing preforms into said mould and means for evacuating hollow objects from the mould, this device comprising at least two blowing modules (11, 12, 13), each module comprising a unit for loading preforms onto equidistant support elements (15) of the conveyor belt (14), a oven (17) for heating the preforms located along a circuit partially defined by said conveyor belt, means for transferring the preforms from the outlet of the oven on the conveyor belt towards a moulding press (20), and a member (21) for unloading the hollow objects, **characterized in that** it comprises means to stagger over time, for each of these modules (11, 12, 13), at least the stages of loading said preforms onto said support elements, and/or the stages of opening the moulding presses.

8. Device according to claim 7, **characterized in that** the conveyor belt (14) forms a single closed circuit designed to supply each module.

9. Device according to claim 7, **characterized in that** it comprises n identical modules, and **in that** the spaces between the different modules are different from one module to the other.

10. Device according to claim 9, **characterized in that** the spaces between the n modules vary according to an arithmetic progression.

11. Device according to claim 7, in which each module comprises a transfer wheel (18) located between the heating oven (17) and the point of entry for the preforms into the press, and means (19) for transferring preforms onto this transfer wheel, **characterized in that** the distance travelled by the preforms between the loading point (16) and the means of transfer (19) onto the transfer wheel is different from one module to the other.

12. Device according to claim 7, in which each module comprises a transfer wheel (18) located between the heating oven (17) and the point of entry for the preforms into the press, and means (19) for transferring preforms onto this transfer wheel, **characterized in that** the distance travelled by the preforms between the means (19) for transferring preforms onto the transfer wheel (18) and the point of entry for the preforms into the press (20) is different from one module to the other.

13. Device according to claim 7, in which each module comprises a transfer wheel (18) located between the heating oven (17) and the point of entry for the preforms into the press, and means (19) for transferring preforms onto this transfer wheel, **characterized in that** the distance travelled by the preforms between the preform loading point (16) and the means (19) for transferring these preforms onto the transfer wheel (18), on the one hand, and the distance between the transfer means (19) and the point of entry for the preforms into the press (20) on the other hand, are different from one module to another.

14. Device according to claim 7, **characterized in that** the distance travelled by the preforms between the loading point (16) of these preforms into each module and the transfer means (19) located at the point of entry for the preforms into the corresponding mould press (20), is different from one module to another.

## Patentansprüche

1. Blasform-Gießverfahren für Hohlkörper und insbesondere für Behälter aus Vorformteilen in einer Vorrichtung, die jeweils mindestens zwei Blasformmodule aufweist, wobei jedes der Module mindestens eine Blasformpresse für die Hohlkörper aufweist, und das Verfahren für jedes Blasformmodul mindestens einen Schritt zum Laden der Vorformteile auf gleich weit von einem Förderband beabstandete Trägerelemente, wobei das Band ununterbrochen angetrieben wird, einen Schritt zum Erhitzen der Vorformteile in einer Heizstation, die entlang eines Kreislaufes angeordnet ist, der teilweise durch das Förderband definiert ist, einen Schritt zum Öffnen der Blasformpresse, einen Schritt zum Einführen der Vorformteile in die Presse, einen Schritt zum Verschließen der Presse, einen Schritt zum Blasformen der Hohlkörper, einen Schritt zum Öffnen der Presse, einen Schritt zum Zurückziehen der Hohlkörper von der Presse und einen Schritt zum Entleeren der Hohlkörper umfaßt,
**dadurch gekennzeichnet, daß**
mindestens die Schritte zum Laden der Vorformteile auf die Trägerelemente und/oder die Schritte zum Öffnen der Pressen für jedes der Module zeitversetzt sind.

2. Verfahren nach Anspruch 1,
**dadurch gekennzeichnet, daß**
die Zeitversetzung für jedes Modul unterschiedlich ist.

3. Verfahren nach Anspruch 1,
**dadurch gekennzeichnet, daß**
zur Sicherstellung der Zeitversetzung der Schritte zum Öffnen der Pressen für jedes der Module eine Veränderung der Durchlaufstreckendistanz der Vorformteile zwischen den Ladepunkten der Vorformteile und den Eingangspunkten der Vorformteile in die entsprechenden Pressen für jedes der Module veranlaßt wird.

4. Verfahren nach Anspruch 3,
**dadurch gekennzeichnet, daß**
die Distanz zwischen den Ladepunkten der Vorformteile und den Eingangspunkten der Vorformteile in die entsprechenden Pressen von einem Modul zum anderen erhöht wird.

5. Verfahren nach Anspruch 1,
**dadurch gekennzeichnet, daß**
die Distanz zwischen den Ladepunkten der verschiedenen Module durch unterschiedliche Beabstandung der Module voneinander verändert wird, wobei die Module identisch sind.

6. Verfahren nach Anspruch 5,
**dadurch gekennzeichnet, daß**
die Abstände zwischen den identischen Modulen einer arithmetischen Folge entsprechen.

7. Blasform-Gießvorrichtung für Hohlkörper und insbesondere für Behälter aus Vorformteilen, die mindestens eine Station zum Erhitzen der Vorformteile, die entlang eines Kreislaufes angeordnet ist, der teilweise durch ein Förderband (14) definiert ist, wobei das Förderband ununterbrochen angetrieben wird, und mindestens eine Gießpresse für die Hohlkörper aufweist, die mindestens eine Blas-Gießform, Mittel zum Einführen der Vorformteile in die Gießform und Mittel zum Entleeren der Hohlkörper aus der Gießform aufweist, wobei die Vorrichtung mindestens zwei Blasformmodule (11,12,13) aufweist, und jedes Modul eine Einheit zum Laden der Vorformteile auf die gleich weit von dem Förderband (14) beabstandeten Trägerelemente (15), einen Heizofen (17) für die Vorformteile, der entlang eines Kreislaufes angeordnet ist, der teilweise durch das Förderband definiert ist, Mittel zum Übertragen der Vorformteile an den Ausgang des Heizofens des Förderbandes in Richtung einer Gießpresse (20) und ein Entladungsorgan (21) für die Hohlkörper aufweist,
**dadurch gekennzeichnet, daß**
sie Mittel zur Zeitversetzung mindestens der Schritte zum Laden der Vorformteile auf die Trägerelemente und/oder der Schritte zum Öffnen der Gießpressen für jedes der Module aufweist.

8. Vorrichtung nach Anspruch 7,
**dadurch gekennzeichnet, daß**
das Endlosförderband (14) einen einzigen geschlossenen Kreislauf bildet, der zur Versorgung eines jeden Moduls angeordnet ist.

9. Vorrichtung nach Anspruch 7,
**dadurch gekennzeichnet, daß**
sie n identische Module aufweist und daß sich die Abstände zwischen den verschiedenen Modulen voneinander unterscheiden.

10. Vorrichtung nach Anspruch 9,
**dadurch gekennzeichnet, daß**
sich die Abstände zwischen den n Modulen entsprechend einer arithmetischen Folge voneinander unterscheiden.

11. Vorrichtung nach Anspruch 7, wobei jedes Modul ein zwischen dem Heizofen (17) und dem Eingangspunkt der Vorformteile in die Presse angeordnetes Übertragungsrad (18) und Mittel (19) zum Übertragen der Vorformteile über das Übertragungsrad aufweist,
**dadurch gekennzeichnet, daß**
die Distanz der Durchlaufstrecke der Vorformteile zwischen dem Ladepunkt (16) und den Mitteln (19) zum Übertragen der Vorformteile über das Übertragungsrad von einem Modul zum anderen unterschiedlich ist.

12. Vorrichtung nach Anspruch 7, wobei jedes Modul ein zwischen dem Heizofen (17) und dem Eingangspunkt der Vorformteile in die Presse angeordnetes Übertragungsrad (18) und Mittel (19) zum Übertragen der Vorformteile über das Übertragungsrad aufweist,
**dadurch gekennzeichnet, daß**
die Distanz der Durchlaufstrecke der Vorformteile zwischen den Mitteln (19) zum Übertragen der Vorformteile über das Übertragungsrad (18) und dem Eingangspunkt der Vorformteile in die Presse (20) von einem Modul zum anderen unterschiedlich ist.

13. Vorrichtung nach Anspruch 7, wobei jedes Modul ein zwischen dem Heizofen (17) und dem Eingangspunkt der Vorformteile in die Presse angeordnetes Übertragungsrad (18) und Mittel (19) zum Übertragen der Vorformteile über das Übertragungsrad aufweist,
**dadurch gekennzeichnet, daß**
die Distanz der Durchlaufstrecke der Vorformteile zwischen dem Ladepunkt (16) der Vorformteile und den Mitteln (19) zum Übertragen der Vorformteile über das Übertragungsrad (18) einerseits, und die Distanz zwischen den Mitteln (19) zum Übertragen und dem Eingangspunkt der Vorformteile in die Presse (20) andererseits von einem Modul zum anderen unterschiedlich ist.

14. Vorrichtung nach Anspruch 7,
**dadurch gekennzeichnet, daß**
die Distanz der Durchlaufstrecke der Vorformteile zwischen dem Ladepunkt (16) der Vorformteile in jedes Modul und den am Eingangspunkt der Vorformteile in die entsprechende Gießpresse (20) positionierten Mitteln (19) zum Übertragen von einem Modul zum anderen unterschiedlich ist.
